# EUROPEAN PATENT APPLICATION

(11) **EP 4 707 233 A1**
(43) Date of publication of application: **11.03.2026**
(21) Application number: 24199168.6
(22) Date of filing: 09.09.2024
(51) Int. Cl.: C01B 17/20

(54) **MODIFIED SULFUR-CONTAINING SOLID ELECTROLYTE AND METHOD FOR PRODUCING IT**

(71) Applicant: Justus-Liebig-Universität Gießen, Körperschaft des öffentlichen Rechts, 35390 Gießen (DE)
(72) Inventor: Richter, Felix, 35392 Gießen (DE); Bing-Xuan, Shi, 35392 Gießen (DE)
(74) Representative: Stumpf, Peter

(57) **Abstract**

The subject matter of the invention provides a viable solvent treatment method for manufacturing surface-modified alkali metal sulfides or alkali metal thiophosphates, especially surface-modified lithium thiophosphates, e.g. Li₆PS₅Cl (mLi₆PS₅Cl). Utilizing nonpolar organic solvents to reduce the concentration of additives with Lewis-basic activity, the surface of, for example Li₆PS₅Cl, is modified to improve the ionic conductivity of electrolytes of type Li₆PS₅Cl or other lithium thiophosphates.

## Description

The invention relates to the production of a sulfide solid electrolyte material and a method for producing it.

### Description

The invention lies in the field of electrochemical cells, for example solid-state alkali metal-ion batteries. It is especially aimed at, but not confined to, solid-state lithium-ion batteries.

### Field of the invention

Solid-state batteries (SSBs) have emerged as potential game-changers in energy-storage devices for electric vehicles and smart grids because of their improved safety and higher energy density than organic liquid electrolyte-based lithium-ion batteries. Lithium-ion solid electrolytes (SEs) can be broadly categorized into oxide, halide, polymer, sulfide and thiophosphate SEs. Regarding sulfide SEs and thiophosphate SEs, even mixed structures are known, e.g. halogen-containing sulfide SEs and halogen-containing thiophosphate SEs; both types are belonging to the overall group of sulfur-based, resp. sulfur-containing SEs. Within scientific literature, both designations (sulfide SE resp. thiophosphate SE) are even sometimes used synonymously, the exact meaning in each case being easily to be concluded from the context by any person of ordinary skill in the art. High ionic conductivity is essential for SEs. Equally important are their low electronic conductivity, superior thermal, electrochemical, and chemical stability, and ease of device integration and processing.

Oxide SEs have better chemical and air stability than thiophosphate SEs but have significant grain boundary resistance. Halide SEs are often used as additives in composite cathodes or as buffer layers at the cathode/thiophosphate SE interface due to good stability toward oxide cathode materials. However, their stability is compromised when paired with lithium metal anodes due to their low oxidation voltage. Polymer SEs bring flexibility and ease of processing. Yet, they have relatively low lithium-ion conductivity (below 10⁻⁴ S·cm⁻¹) and lack thermal stability. As a result, they are commonly blended with inorganic materials to create composite SEs or are coated on active materials. Among the inorganic materials that are used for composite SEs are thiophosphate SEs including lithium-phosphorus-sulfur (LiP-S), lithium thiophosphates with halides (Li₆PS₅X, where X in Li₆PS₅X represents F, Cl, Br, or I) and high-valence-metal or Si-containing compounds (LiₓMP_{y}S_{z}, with M denoting in LiₓMP_{y}S_{z} elements such as Cd, Ni, Fe, Mg, Zn, Al, Si, Ge, Sn).

High-valence-metal containing thiophosphates (such as Li₁₀GeP₂S₁₂) and those without high-valence-metal content (such as Li₆PS₅Cl), demonstrate the highest ionic conductivity of approximately 3 mS·cm⁻¹ and 10 mS·cm⁻¹, respectively. Additionally, they exhibit low grain boundary resistance and maintain firm contact with electrode materials, making SSBs with thiophosphate SEs well-suited for energy storage systems. Nevertheless, the interface instability between thiophosphate SEs in contact with both cathode active materials and a lithium metal anode is a considerable barrier to their commercialization potential.

### Background of the technology

Although lithium metal (Li) is considered the ideal anode material for SSBs due to its high theoretical capacity (3840 mAh/g), the presence of high-valence metal in Li₁₀GeP₂S₁₂ leads to the formation of an electronic-ionic-conductive interface (ECI, synonymously also called mixed conducting interface) rather than a dense and insulating solid-electrolyte interface (SEI) layer. The continuous forming of ECI leads to capacity fading due to the irreversible consumption of Li in anode-free cells and severely increased interface resistance. In contrast, high-valence-metal-free Li₆PS₅Cl is not chemically stable against Li and is reduced to lithium chloride (LiCI), lithium sulfide (Li₂S), and lithium phosphide (LisP) below 1.3 V (vs. Li⁺/Li).

The decomposition products of high-valence-metal-free Li₆PS₅Cl paired with lithium exhibit low electronic conductivity. This characteristic leads to much slower solid-state reaction kinetics primarily governed by diffusion control when compared with Li₁₀GeP₂S₁₂. As a result, Li₆PS₅Cl is more compatible with lithium anodes than Li₁₀GeP₂S₁₂. However, Li₆PS₅Cl is prone to short circuits because of its electronic conductivity and the existence of voids, cracks, and grain boundaries among the particles within the electrolyte layer, which can compromise the integrity of solid-state lithium-ion batteries. To prevent short circuits and enhance interfacial stability between thiophosphate SEs and lithium metal, doping and surface modification of the SEs, introducing a protective interlayer between Li and SEs, and applying a Li alloy are utilized to facilitate the formation of a stable SEI layer.

The electrochemical instability of Li₆PS₅Cl as a catholyte detrimentally affects capacity degradation. The electrochemical instability manifests itself through the oxidation potential of sulfur in thiophosphates, leading to the formation of PS₄³⁻ at about 2.3 V (vs. Li⁺/Li). Moreover, at 3 V (vs. Li⁺/Li), the oxidation of PS₄³⁻ to sulfur and P₂S₅ occurs. These reactions lead to electrochemical degradation during the first charging cycle, hindering ion transport and increasing charge transfer resistance at the electrode-electrolyte interface. Subsequent discharge processes are less impactful due to termination above 2.6 V (vs. Li⁺/Li). Moreover, nickel-rich materials like LiNiO₂, known for their high capacity, experience detrimental chemical reactions at the LiNiO₂/Li₆PS₅Cl interface, even at 0% state of charge (SOC), leading to capacity fading. Additionally, at a high SOC of 4.2 V (vs. Li⁺/Li), oxidation reactions coupled with oxygen loss occur at the LiNiO₂/Li₆PS₅Cl interface. This results in the formation of a passivation layer with oxygenated species and a transition to a rock-salt-like oxide phase structure on the surface of LiNiO₂, which further degrades the interface. Oxygen loss from LiNiO₂ compounds at around 4.2 V (vs. Li⁺/Li) coupled with volume change during cycling also causes chemo-mechanical cracking, exacerbating capacity loss. To mitigate the interfacial instability at the LiNiO₂/Li₆PS₅Cl interface, coating and surface modification of the SEs or cathode particles are employed.

Surface modification of Li₆PS₅Cl is preferable to the process of coated electrodes, as it avoids the complex and costly additional steps involved with both cathode and anode coating and more seamlessly integrates into current production processes. It is known to introduce poly(ethylene glycol) dimethyl ether, an electronically insulating material, into the Li₆PS₅Cl separator via ball milling method to suppress the dendrite formation. It is also known to incorporate the organic salt lithium difluoro(oxalato)borate (LIDFOB) into Li₆PS₅Cl via ball milling to alleviate the interface degradation and the particle cracking of LiCoO₂. Regarding deposition technique, it is known that applying 5 nm of polydimethylsiloxane (PDMS) or fluorinated PDMS (F-PDMS) of coating on Li₆PS₅Cl via vapor-phase deposition process can enhance the stability of its air-sensitive nature, as well as the cathode electrochemical performance when LiNiₓMn_{y}Co_{1-x-y}O₂ is employed as the cathode active material (CAM). In addition, the use of atomic layer deposition to coat Al₂O₃ on Li₆PS₅Cl powders to enhance the Li₆PS₅Cl stability towards the ambient condition and improve the cycle lifetimes of plating and stripping of Li symmetric cell is also known. In regard to gas-solid reaction, LiF is formed on Li₁₀GeP₂S₁₂ by HF gas to suppress Li dendrite formation. Moreover, forming Li₂CO₃ on Li₆PS₅Cl by O₂/CO₂ gases to improve LiCoO₂ cathode performance is also known.

While surface modification applied on thiophosphate SEs like ball milling, vapor-phase deposition, atomic layer deposition, and gas-solid reactions have proven effective for enhancing SSBs performance, solvent treatment methods have not yet been shown to provide positive impacts. This is because the electrophilic P⁵⁺ group in thiophosphate SEs exhibits instability when exposed to polar solvents that have functional groups with free electron pairs acting as Lewis bases like - for example - water, dimethylformamide (DMF), dimethylacetamide (DMAc), N-methyl-2-pyrrolidone (NMP), or alcohols. As the solvent polarity or dielectric constant rises, there is an increase in the degradation of thiophosphate SEs, accompanied by a decrease in their ionic conductivity.

Moreover, the suspensions of SEs in polar solvents show different colors. The various colors indicate different polysulfide chains stabilized by the corresponding solvent. Specifically, it has been revealed that the deep blue colour of the NMP suspension is attributed to a radical species identified as the [S₃]⁻• radical anion. The suspension in tetrahydrofuran (THF) exhibits a yellow color, possibly due to the [S₂]⁻• and [S₄]²⁻ anions. In acetonitrile (ACN) and propylene carbonate (PC), the turquoise and dark green colors are likely caused by a combination of [S₃]⁻• and [S₆]²⁻ anions. For the green suspensions treated with propionitrile (PCN) and pyridine, the coloration could result from a mix of [S₃]⁻• and [S₄]²⁻ anions. Furthermore, polysulfides in suspensions form P-[S]ₙ-P precipitates via P-S-P bonds during drying. These precipitates may appear on the surface of SEs or as separate aggregated particles. The P-[S]ₙ-P bonds in thiophosphates are generally undesirable, as they lower conductivity and compromise battery performance.

It is also observed that the thiophosphate SEs and polar solvents form stable complex structures at a moderate drying temperature of 120 °C under vacuum around ~2·10⁻² mbar and decompose at higher temperatures, matching the results of thermogravimetric analysis (TGA) within known literature. However, incorporating solvents into the SSB fabrication process is crucial, such as preparing slurry for cathode and anode sheet or the wet-milling method for reducing thiophosphate SE particle size. Wet processing is, therefore, only scarcely used and, consequently, the selected solvents for these processes are non-polar, such as xylene or toluene.

US020230343995A1 explicitly teaches that the bonding of Lewis acids to the sulfur centers of sulfide SEs can provide positive effects on solid electrolytes, the central technical effect being that the Lewis acids are bound to sulfur upon the surface of the solid electrolyte. Due to the core relevance of the sulfur atoms for the surface modification, one cannot expect that similarly positive effects could be achieved by applying Lewis bases. This is because that the Lewis bases react with electrophilic P⁵⁺ group in thiophosphate SEs, like we mentioned above. Thus, it is a very surprising finding revealed herein that Lewis bases can also be used to modify sulfur-containing solid electrolytes and achieve even more positive effects.

### Content of the invention

An objective of the present invention is to increase the stability of solid electrolytes. This is achieved by the use of polar solvents for manufacturing of surface-modified solid electrolytes.

In this invention, we introduce a novel solvent treatment for Li₆PS₅Cl and other sulfide solid electrolytes and thiophosphate solid electrolytes using solvents that act as Lewis bases (e.g. NMP, DMF, and DMAc), diluted in nonpolar organic solvents (e.g. o-xylene), as compounds for modifying the surface of - for example - Li₆PS₅Cl, i.e. controlling the formation of the passivation layer on Li₆PS₅Cl and other thiophosphate SEs. The examples described below are elaborated by applying the new solvent treatment (i.e. modification, resp. method for modifying, resp. modification method) to Li₆PS₅Cl. Due to the known broad scope of possible stoichiometry of doped lithium thiophosphates, it is obvious that this modification can be applied to other types of lithium thiophosphates also, without leaving the scope of the invention, namely to lithium thiophosphates of structures I through VII and lithium sulfides of structures VIII and IX.

The method, so far exemplarily tested with a lithium-thiophosphate is also readily applicable with lithium sulfides and even with sodium sulfides and sodium thiophosphates, for the tiny alkaline cations are functioning just as counter ions for the bulky, surface dominating, sulfur ions. Considering the difference in size between alkali cations on one side and sulfur anions on the other side, it can be stated that - without being bound to a certain theory - they (the sulfur anions) are at least mainly responsible for the surface modification, just simply due to the fact that they are constituting the major part of the surface because of their size. This is supported by a simple calculation of the average part of surface area being formed by alkali ions and the corresponding part, being formed by sulfur ions (e.g. based on considering the elementary cells of sample compounds). Although the sodium cation is much larger than the lithium cation, the average amount of surface, being formed by sodium cations, is still much smaller than the average amount of surface, being formed by sulfur ions. Thus, it is obvious that the scope of the invention is comprising sodium containing electrolytes also, e.g. compounds of structure IX.
Structure I (formula (i)):

   (Li₂S)ₓ(P₂S₅)₁₋ₓ, (i)

   with 1 > x > 0.
Structure II (formula (ii)):

   Li₄₋ₓM₁₋ₓPₓS₄, (ii)

   with 1 ≥ x > 0 and M being independently selected from the list comprising Cd, Ni, Fe, Mg, Zn, Al, Si, Ge, Sn.
Structure III (formula (iii)):

   Li₇₋ₓ(PS₄)(S₂₋ₓXₓ), (iii)

   with 2 ≥ x > 0 and X being independently selected from the list comprising F, Cl, Br, I
Structure IV (formula (iv)):

   Li₆₊ₓMₓP₁₋ₓS₅X (iv)

   with 1 > x ≥ 0 and X being independently selected from the list comprising F, Cl, Br, I and M being independently selected from the list comprising Cd, Ni, Fe, Mg, Zn, Al, Si, Ge, Sn.
Structure V (formula (v)):

   Li_{10+*x*}M_{1-*x*}P_{2+*x*}S₁₂ (v)

   with 1 ≥ x ≥ 0 and M being independently selected from the list comprising Cd, Ni, Fe, Mg, Zn, Al, Si, Ge, Sn.
Structure VI (formular (vi)):

   Li_{2*x*}M_{1-*x*}PS₃ (vi)

   with 1 ≥ x > 0 and M being independently selected from the list comprising Cd, Ni, Fe, Mg, Zn, Al, Si, Ge, Sn.
Structure VII (formular (vii)):

   Li₁₊₂ₓM₁₋ₓPS₄ (vii)

   wherein 1 ≥ x ≥ 0 and M being independently selected from the list comprising Cd, Ni, Fe, Mg, Zn, Al, Si, Ge, Sn.
Structure VIII (formular (viii)):

   Li_{9.54}M_{1.74}(P₁₋ₓM'ₓ)_{1.44}S_{11.7}Cl_{0.3}

   wherein 1 > x ≥ 0 and M being independently selected from the list comprising Cd, Ni, Fe, Mg, Zn, Al, Si, Ge, Sn and M' being independently selected from the list comprising P, As, Sb.
Structure IX (formular (ix)):

   Li₆₊ₓMₓM'₁₋ₓS₅X

   with 1 > x ≥ 0 and X being independently selected from the list comprising F, Cl, Br, I and M being independently selected from the list comprising Cd, Ni, Fe, Mg, Zn, Al, Si, Ge, Sn and M' being independently selected from the list comprising P, As, Sb.

Corresponding structures with sodium instead of lithium as alkali metal cation are:
Structure X (formula (x)):

   (Na₂S)ₓ(P₂S₅)₁₋ₓ, (x)

   with 1 > x > 0.
Structure XI (formula (xi)):

   Na₄₋ₓM₁₋ₓPₓS₄, (xi)

   with 1 ≥ x > 0 and M being independently selected from the list comprising Cd, Ni, Fe, Mg, Zn, Al, Si, Ge, Sn.
Structure XII (formula (xii)):

   Na₇₋ₓ(PS₄)(S₂₋ₓXₓ), (xii)

   with 2 ≥ x > 0 and X being independently selected from the list comprising F, Cl, Br, I
Structure XIII (formula (xiii)):

   Na₆₊ₓMₓP₁₋ₓS₅X (xiii)

   with 1 > x ≥ 0 and X being independently selected from the list comprising F, Cl, Br, I and M being independently selected from the list comprising Cd, Ni, Fe, Mg, Zn, Al, Si, Ge, Sn.
Structure XIV (formula (xiv)):

   Na_{10+*x*}M_{1-*x*}P_{2+*x*}S₁₂ (xiv)

   with 1 ≥ x ≥ 0 and M being independently selected from the list comprising Cd, Ni, Fe, Mg, Zn, Al, Si, Ge, Sn.
Structure XV (formular (xv)):

   Na_{2*x*}M_{1-*x*}PS₃ (xv)

   with 1 ≥ x > 0 and M being independently selected from the list comprising Cd, Ni, Fe, Mg, Zn, Al, Si, Ge, Sn.
Structure XVI (formular (xvi)):

   Na₁₊₂ₓM₁₋ₓPS₄ (xvi)

   wherein 1 ≥ x ≥ 0 and M being independently selected from the list comprising Cd, Ni, Fe, Mg, Zn, Al, Si, Ge, Sn.
Structure XVII (formular (xvii)):

   Na_{9.54}M_{1.74}(P₁₋ₓM'ₓ)_{1.44}S_{11.7}Cl_{0.3} (xvii)

   wherein 1 > x ≥ 0 and M being independently selected from the list comprising Cd, Ni, Fe, Mg, Zn, Al, Si, Ge, Sn and M' being independently selected from the list comprising P, As, Sb
Structure XVIII (formular (xviii)):

   Na₆₊ₓMₓM'₁₋ₓS₅X (xviii)

   with 1 > x ≥ 0 and X being independently selected from the list comprising F, Cl, Br, I and M being independently selected from the list comprising Cd, Ni, Fe, Mg, Zn, Al, Si, Ge, Sn and M' being independently selected from the list comprising P, As, Sb.

By controlling the formation of the passivation layer on Li₆PS₅Cl, we can improve the electrochemical performance of SSBs. This protective passivation layer enhances battery efficiency and longevity. The optimized NMP-modified Li₆PS₅Cl, named 0.4 µL mLi₆PS₅C, has an ionic conductivity of about 1.5 mS·cm⁻¹, which is 68% of the pristine Li₆PS₅Cl. LiNiO₂ with modified Li₆PS₅Cl (mLi₆PS₅C) and pristine Li₆PS₅Cl catholytes are used to evaluate the LiNiO₂|Li₆PS₅Cl interface and electrochemical performance. The 0.4 µL mLi₆PS₅Cl (the expression *0.4 µL* denotes the sample name, cf. Table 1) shows superior cycling performance and rate capability compared to pristine Li₆PS₅Cl. The 0.4 µL mLi₆PS₅Cl shows 68.1% capacity retention, compared to only 57.7% capacity retention of pristine Li₆PS₅Cl. In addition, the 0.4 µL mLi₆PS₅C inhibits dendrite growth in Li|Li₆PS₅Cl|Li₆PS₅Cl/VGCF/LiNiO₂ SSBs. This is confirmed by the critical current density (CCD) test with 1 mA·cm⁻² and 1.6 mA·cm⁻² for pristine Li₆PS₅Cl and 0.4 µL mLi₆PS₅Cl, respectively. Overall, our study presents a scalable method for modifying thiophosphate SE.

The present invention provides an innovative and industry-viable solvent treatment method to make surface-modified Li₆PS₅Cl (mLi₆PS₅Cl). Utilizing ortho-xylene (o-xylene) to reduce the concentration of NMP, we developed surface modification cosolvents with different amounts of NMP to disperse Li₆PS₅Cl. Optimized mLi₆PS₅Cl shows an ionic conductivity of approximately 1.5 mS·cm⁻¹, 68% that of pristine Li₆PS₅Cl (2.2 mS·cm⁻¹). The mLi₆PS₅Cl surprisingly demonstrates extraordinary and enhanced cycling and rate performance when used as a catholyte. In addition, this modification not only boosts the electrochemical performance of a composite cathode made of LiNiO₂ (LNO), mLi₆PS₅Cl, and vapor-grown carbon fibers (VGCF), but also mitigates dendrite growth, thus preventing short circuits in LNO/mLi₆PS₅Cl/VGCF|mLi₆PS₅Cl|Li full cells. A modification method is demonstrated, which can be applied in industry and also provides further evidence of the enhanced electrochemical performance of the system revealed herein. The system revealed herein comprises Li|mLi₆PS₅Cl|mLi₆PS₅Cl/VGCF/LiNiO₂, LiIn|mLi₆PS₅Cl|mLi₆PS₅Cl/VGCF/LiNiO₂, Li|mLi₆PS₅Cl|Li, and LiIn|mLi₆PS₅Cl|mLi₆PS₅Cl/VGCF._{.}

### Detailed embodiments of the invention

All embodiments provided herein are meant to be of exemplary nature only. They are not to be understood as confining the scope of the invention.

Li₆PS₅Cl, o-xylene (or m-, p-xylene, toluene etc., or mixtures thereof), and the solvent used for modification (e.g. NMP, dimethylformamide (DMF), N,N-dimethylacetamide (DMAc)) are added in a centrifuge tube, which is then vigorously shaken for one minute to ensure thorough mixing. Following this, the mixture undergoes centrifugation at a speed of 4000 revolutions per minute (rpm) for two minutes. Subsequently, the supernatant is carefully decanted, leaving the wet Li₆PS₅Cl precipitated at the bottom of the centrifuge tube. This wet Li₆PS₅Cl is then immediately subjected to a drying process under vacuum around 5·10⁻² mbar at a temperature of 120 °C (depending on additive and pressure), which was sustained for two days to achieve complete dryness.

The drying temperature of the modified material (e.g. mLi₆PS₅Cl) is mainly dependent on the decomposition temperature of the modified material itself (including the additive upon the surface of the modified material), which may be up to 600 °C, depending also on the structure and the applied additive. Thus, the drying temperature may be any temperature up to 600 °C, preferably a temperature in between 0 °C and 150 °C.

The drying time can be varied within a broad range, up to 5 days, depending on the drying temperature, basic material, grain structure, grain size, additive(s) etc. Preferably the drying time is between 1 hour to 3 days.

The drying pressure can be varied to shorten the drying time and/or to reduce the drying temperature. By varying the drying pressure, the process can be adapted to various conditions regarding different solvents/additives and different oxidation processes during drying. The drying pressure can therefore vary within a broad range from atmospheric pressure (about 101325 Pa, absolute) to 1 Pa (absolute).

**Table 1.1 Summary of examples (experimental parameters), part 1.**

| Sample | (1) | (2) | (3) | (4) | (5) | (6) | (7) |
|---|---|---|---|---|---|---|---|
| Sample name | 0.4 µL | 1 µL | 5 µL | 0.02 mL | 0.2 mL | 2 mL | 10 mL |
| Li₆PS₅Cl amount | 1 g Li₆PS₅Cl | | | | | | |
| *V*(NMP) | 0.4 µL | 1 µL | 5 µL | 20 µL | 0.2 mL | 2 mL | 10 mL |
| o-xylene | 40 mL | | | | | | |

**Table 1.2 Summary of examples (experimental parameters), part 2.**

| Sample | (8) | (9) | (10) |
|---|---|---|---|
| Sample name | NMP-Li₆PS₅Cl | 0.4 µL DMF | 0.4 µL DMAc |
| Li₆PS₅Cl amount | 1 g Li₆PS₅Cl | | |
| V(Solvent) | 30 mL NMP | 0.4 µL DMF | 0.4 µL DMAc |
| o-xylene | No o-xylene added | 40 mL | 40 mL |

### Fourier-transform infrared spectroscopy (FTIR)

FTIR spectra of the pristine Li₆PS₅Cl and mLi₆PS₅Cl samples are recorded with a total number of 96 scans on an ATR-FTIR Thermo Fischer Scientific iD5 ATR spectrometer (550-4000 cm⁻¹).

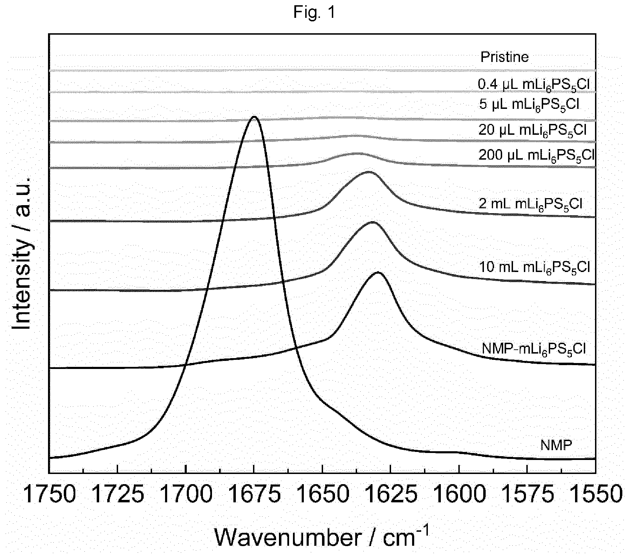

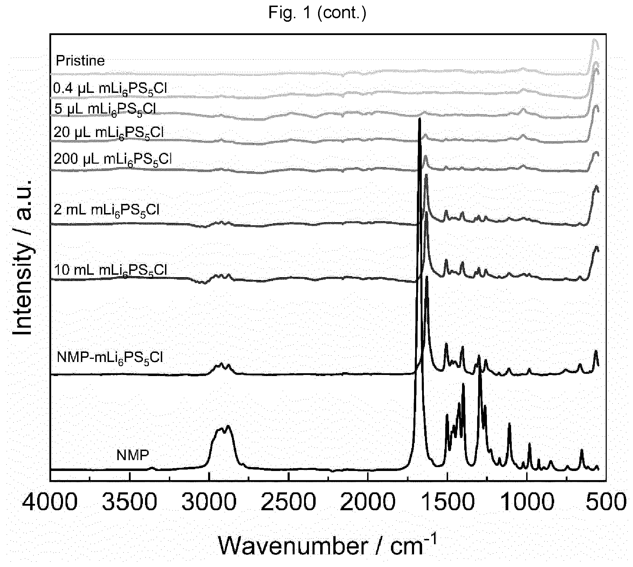

The FTIR findings for NMP and mLi₆PS₅Cl samples are depicted in the referenced figure (Fig. 1). The FTIR spectra of samples with varying amounts of NMP modification, from NMP-mLi₆PS₅Cl to 200 µL mLi₆PS₅Cl, are similar to that of pure NMP, with the notable exception of a red shift in the C=O stretching frequency, around 1675 cm⁻¹. This shift signifies that NMP is securely integrated into Li₆PS₅Cl, and it remains stable even under vacuum conditions (~2·10⁻² bar) at 120 °C. The distinct difference in the C=O stretching frequency between pure NMP (1675 cm⁻¹) and mLi₆PS₅Cl (ranging from 1630~1640 cm⁻¹) confirms the presence of electrostatic interaction between the C=O group and Li₆PS₅Cl, in line with findings according to the state of the art.

### Ionic conductivity tests

Approximately 80 mg of either modified or pristine Li₆PS₅Cl is pressed into a pellet inside a press cell, providing a stainless-steel|modified or pristine Li₆PS₅Cl|stainless-steel setup, to achieve a thickness of pellet about 600-700 µm. This cell is then compressed using a Specac Autotouch^{®} 25 T Press, applying a force of 3 tons for 3 minutes. Afterward, the cell is enclosed in an aluminum frame that maintains a consistent pressure of 50 MPa. The ionic conductivity of the sample is measured using electrochemical impedance spectroscopy (EIS) conducted with a VMP-300 Biologic potentiostat. This measurement is conducted within a climate chamber by Weiss Technik, which allows temperature control ranging from -40 °C to 80 °C. For the EIS setting, sinusoidal amplitudes are set at 10 mV, with a frequency range from 1 MHz to 100 mHz.

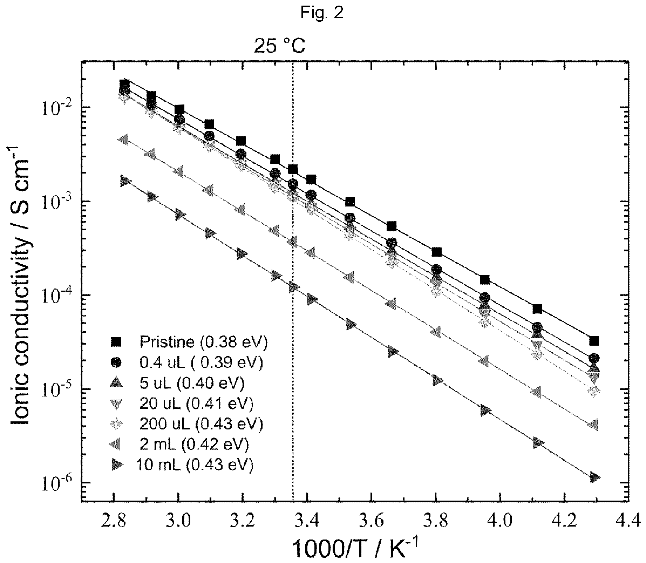

The Arrhenius plot indicates a clear trend where Li₆PS₅Cl samples treated with minimal NMP exhibit higher ionic conductivity, as illustrated in the referenced figure (Fig. 2). Specifically, Li₆PS₅Cl with 0.4 µL NMP treatment shows an ionic conductivity of 1.5 mS·cm⁻¹ at 25 °C, which is 68% of that of pristine Li₆PS₅Cl (2.2 mS·cm⁻¹). Conversely, Li₆PS₅Cl treated with 10 mL NMP demonstrates the lowest ionic conductivity at 0.12 mS·cm⁻¹ at 25 °C, which is 6% of that of pristine Li₆PS₅Cl. This trend is also reflected in the activation energies as presented in the Figure legend (Fig. 2). Further comparison reveals that the ionic conductivity at 25 °C of 5 µL (1.2 mS·cm⁻¹) and 200 µL mLi₆PS₅Cl (1.1 mS·cm⁻¹) exhibit 60% and 55% of the ionic conductivity of pristine Li₆PS₅Cl, respectively. Consequently, the 0.4 µL mLi₆PS₅Cl emerges as the most superior ionic conductivity compared to other mLi₆PS₅Cl samples treated with NMP, making it the preferred candidate for further studies. Nevertheless, there is potential for further optimization of NMP quantity for industrial use.

### Cathode electrochemical analysis

Cathode electrochemical analysis including rate capability test and cycling performance are conducted using pellet-type cells inside an argon-filled glovebox (LabMaster, MBraun, Garching, Germany) with less than 0.1 ppm each of O₂ and H₂O. For both rate capability and cycling tests, asymmetric cells are assembled as LiIn|pristine Li₆PS₅Cl|pristine Li₆PS₅Cl/VGCF/LNO, LiIn|mLi₆PS₅Cl|mLi₆PS₅Cl/VGCF/LNO, and Liln|pristine Li₆PS₅Cl|modified Li₆PS₅Cl/VGCF/LNO.

First, 80 mg of Li₆PS₅Cl is pressed into a pellet inside a polyether ether ketone (PEEK) cylinder insulator. The cathode composite is then prepared by mixing 69.3% LNO, 29.7% modified or pristine Li₆PS₅Cl, and 1% VGCF (200 mg in total) using a mixing instrument Pulverisette 23 from Fritsch for about 1 hour under 30 Hz. 12 mg of cathode composite is then pressed onto one side of the electrolyte. On the opposite side, indium (100 µm thick, 9 mm diameter) and lithium foils (125 µm thick, 6 mm diameter) serve as the lithium-indium (Liln) alloy anode. Post-assembly, the cell is compressed under 30 kN for 3 minutes, yielding a 500 µm solid electrolyte alongside a 30 µm cathode composite. For the analysis, the assembled cell is placed in an external stainless-steel casing exerting approximately 60 MPa and conducted in a VMP-300 (BioLogic) electrochemical workstation at 25 °C.

### Rate capability result and discussion

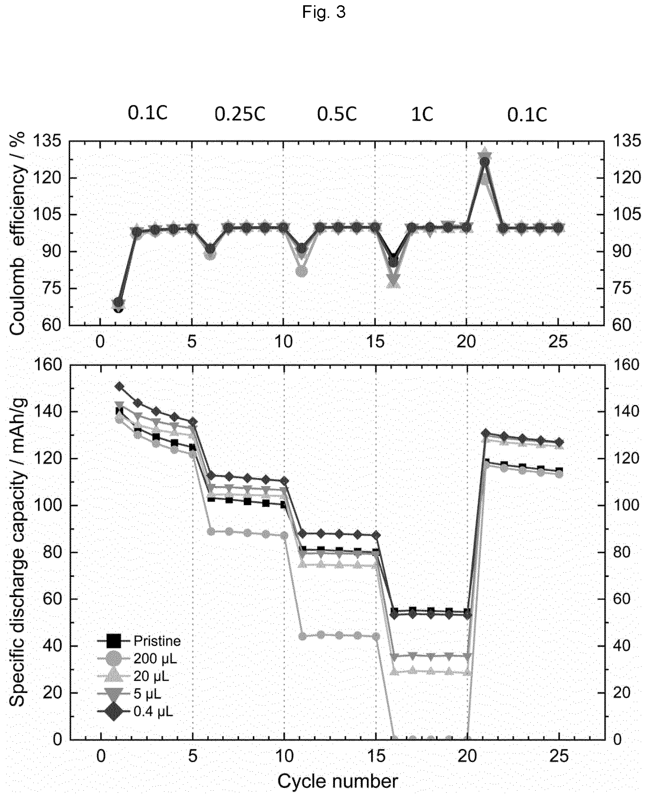

The rate capability of mLi₆PS₅Cl modified by NMP (LiIn|modified Li₆PS₅Cl|modified Li₆PS₅Cl/VGCF/LNO) is evaluated at various C-rates (0.1C, 0.25C, 0.5C, 1C), and compared with pristine Li₆PS₅Cl (Liln|pristine Li₆PS₅Cl|pristine Li₆PS₅Cl/VGCF/LNO), as illustrated in the referenced figure (Fig. 3). The initial discharge capacity results show that 0.4 µL mLi₆PS₅Cl exhibits the highest capacity, approximately 151 mAh/g, surpassing the pristine Li₆PS₅Cl, which displays around 140 mAh/g. The 200 µL mLi₆PS₅Cl demonstrates the lowest capacity, around 136 mAh/g. Notably, at a 1C rate, the discharge capacity of 0.4 µL mLi₆PS₅Cl is comparable to that of pristine Li₆PS₅Cl. However, 200 µL mLi₆PS₅Cl shows no discharge capacity at this rate. At a 0.1C rate, the 5 µL mLi₆PS₅Cl exhibits a similar capacity to 0.4 µL mLi₆PS₅Cl, yet at higher rates, the latter demonstrates significantly greater performance. This disparity may be attributed to the slower lithium-ion conduction of thicker modification layer of 5 µL mLi₆PS₅Cl compared to 0.4 µL mLi₆PS₅Cl. Furthermore, the thicker modification layer of mLi₆PS₅Cl could result in higher charge transfer resistance. Interestingly, the performance improvement of 0.4 µL mLi₆PS₅Cl is more pronounced at lower C-rates, possibly due to reduced interface degradation. Upon reverting to 0.1C, the discharge capacity of pristine Li₆PS₅Cl drops to around 114 mAh/g, while 0.4 µL mLi₆PS₅Cl maintains a higher capacity of around 128 mAh/g. In summary, 0.4 µL mLi₆PS₅Cl consistently outperforms the pristine Li₆PS₅Cl and other mLi₆PS₅Cl variants across various C-rates, though it exhibits similar discharge capacity to pristine Li₆PS₅Cl at 1C.

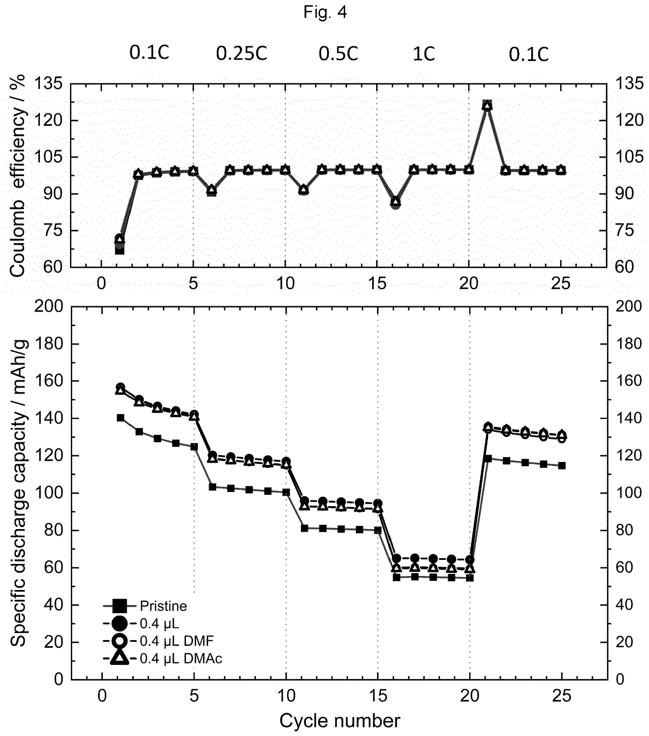

To compare the rate capability of pristine Li₆PS₅Cl and mLi₆PS₅Cls (modified by NMP, DNF, and DMAc), the experiment uses two cell configurations: Liln|pristine Li₆PS₅Cl|pristine Li₆PS₅Cl/VGCF/LNO and Liln|pristine Li₆PS₅Cl|mLi₆PS₅Cl/VGCF/LNO. The result is shown in the referenced figure (Fig. 4). With using the mLi₆PS₅Cl as a catholyte and using pristine Li₆PS₅Cl as a separator, the performance of 0.4 µL mLi₆PS₅Cl, 0.4 µL DMF mLi₆PS₅Cl, and 0.4 µL DMAc mLi₆PS₅Cl are similar and even much improved (~155 mAh/g) than pristine Li₆PS₅Cl (~140 mAh/g) in the first cycle. Moreover, at a 1C rate, the discharge capacity of mLi₆PS₅Cls (~60 mAh/g) is more than that of pristine Li₆PS₅Cl (~50 mAh/g). Overall, mLi₆PS₅Cls consistently outperform the pristine Li₆PS₅Cl and other mLi₆PS₅Cls across various C-rates.

### Cycling performance result and discussion

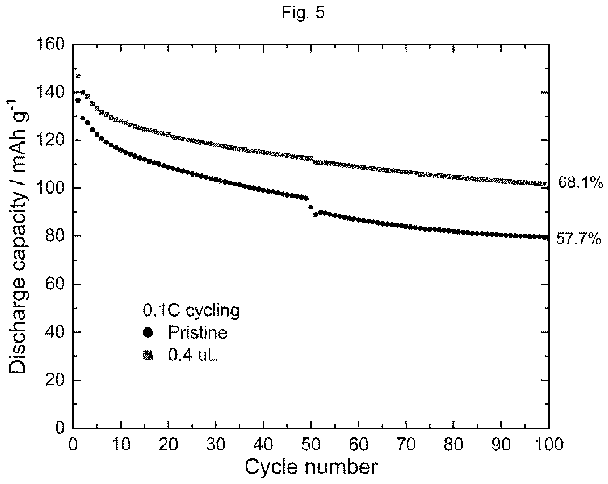

The cycling performance of pristine Li₆PS₅Cl and 0.4 µL mLi₆PS₅Cl is shown in referenced figure (Fig. 5). The cycling performance is evaluated at 0.1C for 100 cycles. At 0.1C, 0.4 µL mLi₆PS₅Cl starts with a higher discharge capacity of around 146.8 mAh/g compared to pristine Li₆PS₅Cl (136.7 mAh/g), matching the results of rate capability test. Furthermore, after 100 cycles, mLi₆PS₅Cl still maintains a capacity of 68.1% (100.1 mAh/g), in contrast to pristine Li₆PS₅Cl, which ends with only 57.7% (78.8 mAh/g) of its initial capacity. Therefore, 0.4 µL mLi₆PS₅Cl has significantly improved the long-term cycling performance compared to pristine Li₆PS₅Cl.

### Anode electrochemical analysis

Anode electrochemical analysis including CCD and one direction stripping tests (ODS) are assembled using pellet-type symmetric cells (Li|modified or pristine Li₆PS₅Cl|Li) inside an argon-filled glovebox (LabMaster, MBraun, Garching, Germany) with less than 0.1 ppm each of O₂ and H₂O. 80 mg of Li₆PS₅Cl is firstly hand pressed into a pellet inside a PEEK cylinder insulator and further pressed with 30 kN for 3 minutes. Finally, 8 mm in diameter Li foils are placed on both sides of the Li₆PS₅Cl separator. The CCD and ODS tests are then conducted under constant pressure (20 MPa) and at 25 °C in VMP-300 (BioLogic) electrochemical workstation with specific currents ranging from 0.1 mA·cm² to 1.6 mA·cm² and 0.1 mA·cm² to 1.2 mA·cm² for CCD and ODS tests, respectively. The specific area capacity of tests is maintained at 1 mAh·cm² for both CCD and ODS tests.

CCD testing reveals that pristine Li₆PS₅Cl and 0.4 µL mLi₆PS₅Cl experience short-circuiting at approximately 1 mA·cm² and 1.6 mA·cm², respectively.

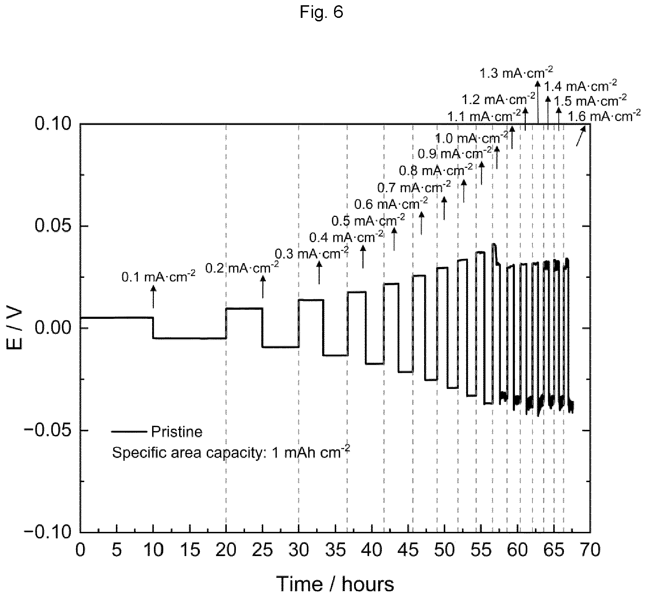

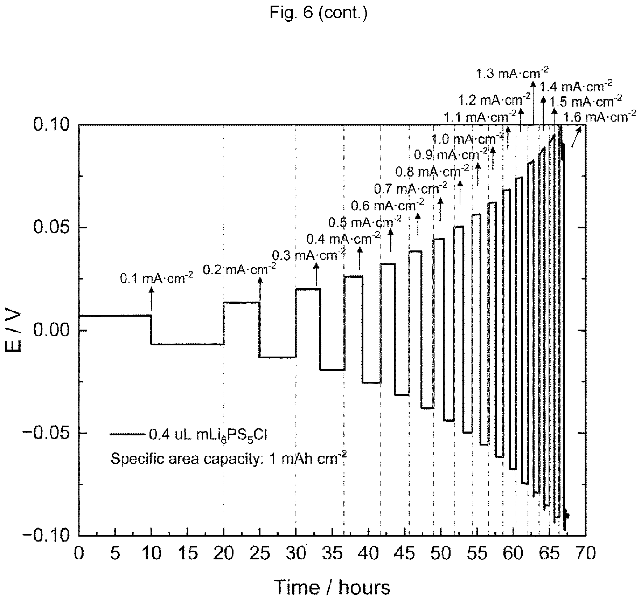

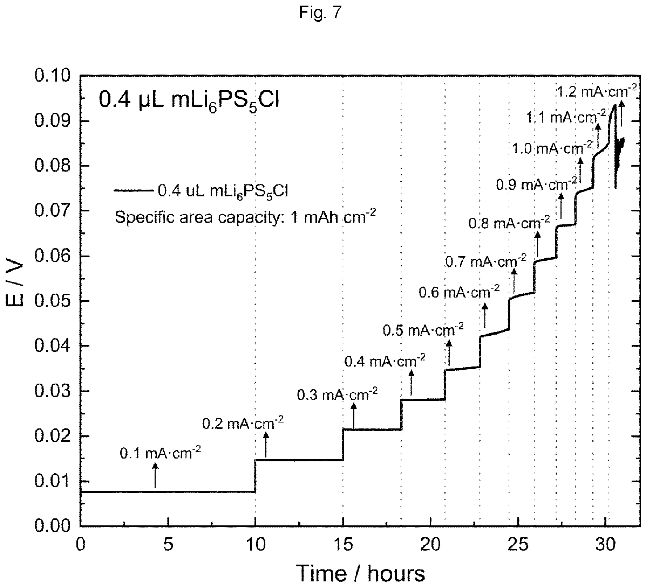

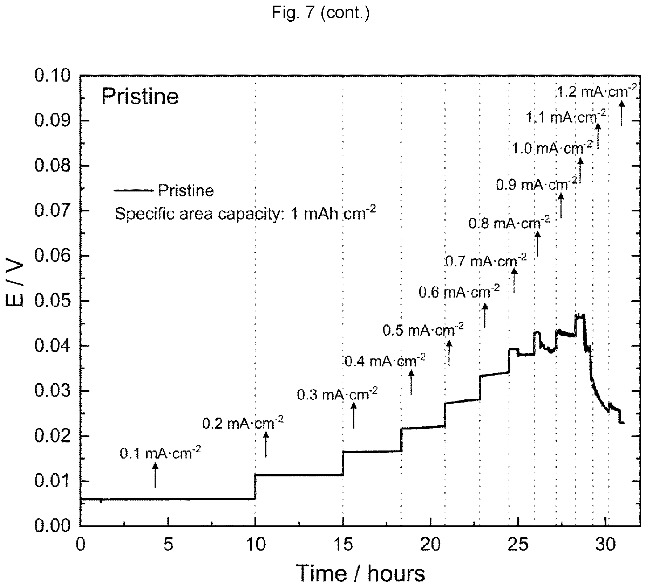

To further distinguish between contact loss and lithium dendrite effects, ODS was conducted under 20 MPa. At lower currents, lithium deposits only on one side and one direction, causing dendrite growth, while contact loss occurs on the opposite side but is reduced by the 20 MPa pressure. At higher currents, dendrite growth remains pronounced on one side but contact loss on the other side is less mitigated. As seen in the referenced figure of ODS (Fig. 7), the voltage plateau at 0.9 mA·cm² is still flat for 0.4 µL mLi₆PS₅Cl, which means that contact loss is not severe. Notably, dendrite formation is more significant in ODS than in CCD. ODS results also show that pristine Li₆PS₅Cl and 0.4 µL mLi₆PS₅Cl encounter short-circuiting around 0.7 mA·cm² and 1.2 mA·cm², respectively, which aligns with CCD findings. Furthermore, due to lower ionic conductivity, the overpotential in the Li|pristine Li₆PS₅Cl|Li cell is lower than that in the Li|0.4 µL mLi₆PS₅Cl|Li cell at each current step before short-circuiting occurs. A sudden voltage drop indicates a short circuit within the solid electrolyte due to dendrite growth (cf. Fig. 6 and 7). Through CCD and ODS measurements, it is evident that 0.4 µL mLi₆PS₅Cl can suppress dendrite formation.

### Full cell cycling performance

The assembly method for the lithium full cell, designed to evaluate cycling performance, follows the same protocol as that used in cathode electrochemical analysis. However, in this setup, pure lithium is employed as the anode, in place of the Liln used previously. The cathode composite consists of 0.4 µL mLi₆PS₅Cl, VGCF, and LNO. For the separator, a choice is made between 0.4 µL mLi₆PS₅Cl and pristine Li₆PS₅Cl. Therefore, the complete structure of the full cell is composed as follows: Li|modified or pristine Li₆PS₅Cl separator|0.4 µL mLi₆PS₅Cl/VGCF/LNO.

The manufacturing process of the battery cell, as described in the previous paragraph is defined herein as the standard manufacturing type of battery cell, varying only in type of anode, depending on the intended measurement.

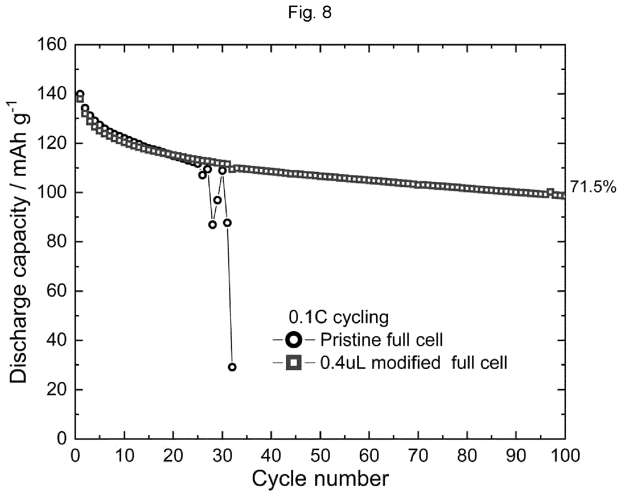

In this experiment (Fig. 8), the primary objective was to determine the onset of a short circuit in the full cell when using either the modified or pristine Li₆PS₅Cl as a separator. The results indicated that the full cell with 0.4 µL mLi₆PS₅Cl separator exhibited similar capacity retention after 100 cycles compared to the Liln cell mentioned previously (LiIn|0.4 µL mLi₆PS₅Cl|0.4 µL mLi₆PS₅Cl/VGCF/LNO). The initial reduced capacity contribution for the Li full cell could be attributed to the lower applied pressure of approximately 20 MPa, which is less than the 50 MPa in the Liln cell. Conversely, the cell employing pristine Li₆PS₅Cl as the separator has a similar cycling performance compared to 0.4 µL mLi₆PS₅Cl before 25^{th} cycle but experienced a short circuit after just 25 cycles. This outcome further substantiates the observation that the pristine Li₆PS₅Cl exhibits a reduced capability to suppress dendrite formation compared to 0.4 µL mLi₆PS₅Cl. In addition, a similar cycling trend for 0.4 µL mLi₆PS₅Cl and pristine Li₆PS₅Cl separator means that the cathode composite is the major factor for battery capacity degradation (cf. Fig. 8).

For defining the cycling performance, the capacity retention is calculated by dividing the difference in capacity between the first and last cycle by the capacity of the initial cycle. The capacity retention may either be expressed in this way directly by a value in the range between 0 and 1.0 or as a value of percentage between 0% and 100%.

### Electrochemical stability:

Electrochemical stability of both pristine Li₆PS₅Cl and mLi₆PS₅Cl are assessed using cyclic voltammetry (CV) in configurations of Liln|pristine Li₆PS₅Cl |pristine Li₆PS₅Cl/VGCF and LiIn|mLi₆PS₅Cl|mLi₆PS₅Cl/VGCF. CV is scanned from open-circuit voltage (OCV) to 0 V or 4 V vs. In/InLi at a 1 mV·s⁻¹ scan rate. VGCF increases contact area and serves as the working electrode. Liln alloy, typically regarded as thermodynamically and kinetically stable toward SEs, are used as reference and counter electrodes.

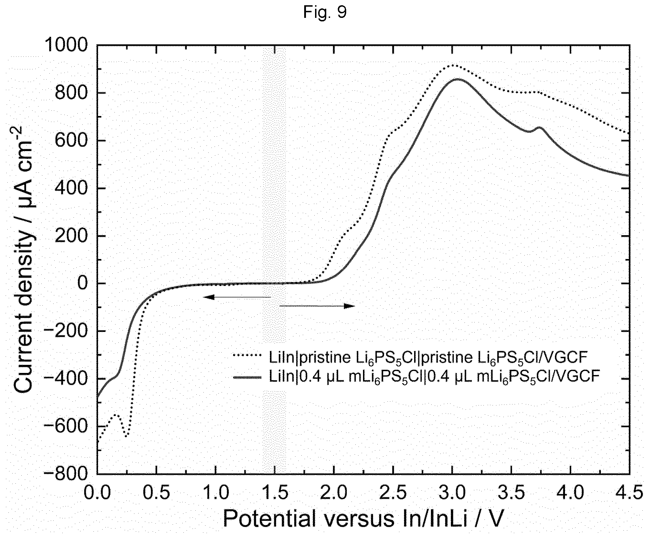

The 0.4 µL mLi₆PS₅Cl exhibits lower current density and wider stability window (1.48 V) without extra side reaction peaks compared to pristine Li₆PS₅Cl (1.2 V). Moreover, increased modification further suppresses the current density (Fig. 9). Overall, the mLi₆PS₅Cl shows improved electrochemical stability.

### Description of the drawings

- Fig. 1 :: Exemplary results of Fourier-transform infrared spectroscopy
- Fig. 2 :: Exemplary measurements of ionic conductivity tests
- Fig. 3:: Exemplary measurements of cathode electrochemical analysis: experimental results of rate capability test (Liln|pristine Li₆PS₅Cl|pristine Li₆PS₅Cl/VGCF/LNO and LiIn|modified Li₆PS₅Cl|modified Li₆PS₅Cl/VGCF/LNO)
- Fig. 4 :: Exemplary measurements of cathode electrochemical analysis: rate capability test (Liln|pristine Li₆PS₅Cl|pristine Li₆PS₅Cl/VGCF/LNO and LiIn|pristine Li₆PS₅Cl|modified Li₆PS₅Cl/VGCF/LNO).
- Fig. 5:: Exemplary measurements of cathode electrochemical analysis: cycling performance (Liln|pristine Li₆PS₅Cl|pristine Li₆PS₅Cl/VGCF/LNO and LiIn|modified Li₆PS₅Cl|modified Li₆PS₅Cl/VGCF/LNO).
- Fig. 6:: Exemplary results of critical current density tests (CCD)
- Fig. 7:: Exemplary results of one direction stripping tests (ODS)
- Fig. 8:: Exemplary results of full cell cycling performance
- Fig. 9:: Exemplary results of determination of electrochemical stability (LiIn|pristine Li₆PS₅Cl| pristine Li₆PS₅Cl /VGCF and LiIn|mLi₆PS₅Ci|mLi₆PS₅Cl/VGCF)

## Claims

1. A method for modifying a material, the material being an
alkali metal sulfide or an alkali metal thiophosphate,
**characterized in that** the modification comprises the following steps
i) providing the material;
ii) providing a solution of at least one additive A in at least one solvent B, whereat
- the at least one additive A has at least one substituent which is allowing it to act as a Lewis base, and
- the at least one solvent B is a semi-polar or non-polar organic solvent having a polarity index less than 0.35;
iii) suspending the material as provided according to step i) in the solution as provided according to step ii), thus obtaining suspended modified material;
iv) separating the suspended modified material from the suspension according to step iii), so that modified material is acquired;
v) drying the modified material as obtained by step iv).

2. A method according to claim 1, **characterized in that** the alkali metal
thiophosphate is a material of formula (i),
(Li₂S)ₓ(P₂S₅)₁₋ₓ, (i)
wherein 1 > x > 0;
or a material of formula (ii),
Li₄₋ₓM₁₋ₓPₓS₄, (ii)
wherein 1 ≥ x > 0 and M being independently selected from the list comprising Cd, Ni, Fe, Mg, Zn, Al, Si, Ge, Sn;
or a material of formula (iii),
Li₇₋ₓ(PS₄)(S₂₋ₓXₓ), (iii)
wherein 2 ≥ x > 0 and X being independently selected from the list comprising F, Cl, Br, I;
or a material of formula (iv),
Li₆₊ₓMₓP₁₋ₓS₅X, (iv)
with 1 > x ≥ 0 and X being independently selected from the list comprising F, Cl, Br, I
and M being independently selected from the list comprising Cd, Ni, Fe, Mg, Zn, Al, Si, Ge, Sn;
or a material of formula (v),
Li_{10+*x*}M_{1-*x*}P_{2+*x*}S₁₂, (v)
with 1 ≥ x ≥ 0 and M being independently selected from the list comprising Cd, Ni, Fe, Mg, Zn, Al, Si, Ge, Sn;
or a material of formula (vi)
Li_{2*x*}M_{1-*x*}PS₃, (vi)
with 1 ≥ x > 0 and M being independently selected from the list comprising Cd, Ni, Fe, Mg, Zn, Al, Si, Ge, Sn;
or a material of formula (vii)
Li₁₊₂ₓM₁₋ₓPS₄, (vii)
with 1 ≥ x ≥ 0 and M being independently selected from the list comprising Cd, Ni, Fe, Mg, Zn, Al, Si, Ge, Sn.
or a material of formula (viii)
Li_{9.54}M_{1.74}(P₁₋ₓM'ₓ)_{1.44}S_{11.7}Cl_{0.3}, (viii)
with 1 > x ≥ 0 and M being independently selected
from the list comprising Cd, Ni, Fe, Mg, Zn, Al, Si, Ge, Sn, and M' being independently selected from the list comprising P, As, Sb.

3. A method according to claim 1, **characterized in that** the alkali metal sulfide is a material of formula (ix)
Li₆₊ₓMₓM'₁₋ₓS₅X, (ix)
with 1 > x ≥ 0 and X being independently selected from the list comprising F, Cl, Br, I and M being independently selected from the list comprising Cd, Ni, Fe, Mg, Zn, Al, Si, Ge, Sn, and M' being independently selected from the list comprising P, As, Sb.

4. A method according to claim 1, **characterized in that** the alkali metal thiophosphate is a material of formula (x),
(Na₂S)ₓ(P₂S₅)₁₋ₓ, (x)
wherein 1 > x > 0;
or a material of formula (xi),
Na₄₋ₓM₁₋ₓPₓS₄, (xi)
wherein 1 ≥ x > 0 and M being independently
selected from the list comprising Cd, Ni, Fe, Mg, Zn, Al, Si, Ge, Sn;
or a material of formula (xii),
Na₇₋ₓ(PS₄)(S₂₋ₓXₓ), (xii)
wherein 2 ≥ x > 0 and X being independently selected
from the list comprising F, Cl, Br, I;
or a material of formula (xiii),
Na₆₊ₓMₓP₁₋ₓS₅X, (xiii)
with 1 > x ≥ 0 and X being independently selected from the list comprising F, Cl, Br, I
and M being independently selected from the list comprising Cd, Ni, Fe, Mg, Zn, Al, Si, Ge, Sn;
or a material of formula (xiv),
Na_{10+*x*}M_{1-*x*}P_{2+*x*}S₁₂, (xiv)
with 1 ≥ x ≥ 0 and M being independently selected from the list comprising Cd, Ni, Fe, Mg, Zn, Al, Si, Ge, Sn;
or a material of formula (xv)
Na_{2*x*}M_{1-*x*}PS₃, (xv)
with 1 ≥ x > 0 and M being independently selected from the list comprising Cd, Ni, Fe, Mg, Zn, Al, Si, Ge, Sn;
or a material of formula (xvi)
Na₁₊₂ₓM₁₋ₓPS₄, (xvi)
with 1 ≥ x ≥ 0 and M being independently selected from the list comprising Cd, Ni, Fe, Mg, Zn, Al, Si, Ge, Sn.
or a material of formula (xvii)
Na_{9.54}M_{1.74}(P₁₋ₓM'ₓ)_{1.44}S_{11.7}Cl_{0.3} (xvii)
with 1 > x ≥ 0 and M being independently selected
from the list comprising Cd, Ni, Fe, Mg, Zn, Al, Si, Ge, Sn and M' being independently selected from the list comprising P, As, Sb.

5. A method according to claim 1, **characterized in that** the alkali metal sulfide is a material of formula (xviii)
Na₆₊ₓMₓM'₁₋ₓS₅X, (xviii)
with 1 > x ≥ 0 and X being independently selected from the list comprising F, Cl, Br, I and M being independently selected from the list comprising Cd, Ni, Fe, Mg, Zn, Al, Si, Ge, Sn and M' being independently selected from the list comprising P, As, Sb.

6. A method according to any one of the previous claims, **characterized in that**
- the at least one additive A has at least one substituent, independently chosen from the list of substituents comprising -OH, -F, -Cl, -Br, -I, aldehyde, amino (primary, secondary, tertiary), anhydride, amide group, carbonyl, carboxyl, carbonate, ether, phosphate, sulfate, lactone, ketone, quinone, phenol, nitrile, nitro;
and
- the at least one solvent B is independently chosen from the list of solvents comprising dichloromethane, pyridine, dibromomethane, chloroform, diethylene glycol dimethyl ether, dimethyl carbonate, dimethoxyethane, ethyl acetate, tetrahydrofuran, toluene, xylene, heptane, hexane.

7. Modified material according to claim 1 of type lithium thiophosphate, having formula (i),
(Li₂S)ₓ(P₂S₅)₁₋ₓ, (i)
wherein 1 > x > 0;
or having formula (ii),
Li₄₋ₓM₁₋ₓPₓS₄, (ii)
wherein 1 ≥ x > 0 and M being independently
selected from the list comprising Cd, Ni, Fe, Mg, Zn, Al, Si, Ge, Sn;
or having formula (iii),
Li₇₋ₓ(PS₄)(S₂₋ₓXₓ), (iii)
wherein 2 ≥ x > 0 and X being independently selected from the list comprising F, Cl, Br, I;
or having formula (iv),
Li₆₊ₓMₓP₁₋ₓS₅X, (iv)
wherein 1 > x ≥ 0 and X being independently selected from the list comprising F, Cl, Br, I
and M being independently selected from the list comprising Cd, Ni, Fe, Mg, Zn, Al, Si, Ge, Sn;
or having formula (v),
Li_{10+*x*}M_{1-*x*}P_{2+*x*}S₁₂, (v)
wherein 1 ≥ x ≥ 0 and M being independently selected from the list comprising Cd, Ni, Fe, Mg, Zn, Al, Si, Ge, Sn;
or having formula (vi)
Li_{2*x*}M_{1-*x*}PS₃, (vi)
wherein 1 ≥ x > 0 and M being independently selected from the list comprising Cd, Ni, Fe, Mg, Zn, Al, Si, Ge, Sn;
or having formula (vii)
Li₁₊₂ₓM₁₋ₓPS₄, (vii)
wherein 1 ≥ x ≥ 0 and M being independently selected from the list comprising Cd, Ni, Fe, Mg, Zn, Al, Si, Ge, Sn;
or having formula (viii)
Li_{9.54}M_{1.74}(P₁₋ₓM'ₓ)_{1.44}S_{1 1.7}Cl_{0.3}, (viii)
wherein 1 > x ≥ 0 and M being independently selected
from the list comprising Cd, Ni, Fe, Mg, Zn, Al, Si, Ge, Sn and M' being independently selected from the list comprising P, As, Sb;
**characterized in that** the modified material exerts
- at least one signal of the IR-spectrum of the at least one additive being part of the surface of the modified material,
the at least one additive being a Lewis base and/or
- an increase of the electrochemical stability towards pristine (unmodified) material of at least 120% and/or
- a decrease of the ionic conductivity not more than 50% of the ionic conductivity of pristine (unmodified) material and/or
- an increase of the rate capability, defined in such a way that the capacity at 0.5C is at least 5 mAh/g higher than that of pristine material and/or
- an increase of the cycling stability in such a way that the capacity retention after 100 cycles is 10% higher than the capacity retention of pristine material after 100 cycles and/or
- an increase of the electrochemical performance of the modified material in such a way that a battery cell of standard manufacturing type, having lithium as an anode, shows no short circuit until at least 100 cycles.

8. Modified material according to claim 1 of type lithium sulfide, having formula (ix),
Li₆₊ₓMₓM'₁₋ₓS₅X, (ix)
with 1 > x ≥ 0 and X being independently selected from the list comprising F, Cl, Br, I and M being independently selected from the list comprising Cd, Ni, Fe, Mg, Zn, Al, Si, Ge, Sn and M' being independently selected from the list comprising P, As, Sb,
**characterized in that** the modified material exerts
- at least one signal of the IR-spectrum of the at least one additive being part of the surface of the modified material,
the at least one additive being a Lewis base and/or
- an increase of the electrochemical stability towards pristine (unmodified) material of at least 120% and/or
- a decrease of the ionic conductivity not more than 50% of the ionic conductivity of pristine (unmodified) material and/or
- an increase of the rate capability, defined in such a way that the capacity at 0.5C is at least 5 mAh/g higher than that of pristine material and/or
- an increase of the cycling stability in such a way that the capacity retention after 100 cycles is 10% higher than the capacity retention of pristine material after 100 cycles and/or
- an increase of the electrochemical performance of the modified material in such a way that a battery cell of standard manufacturing type, having lithium as an anode, shows no short circuit until at least 100 cycles.

9. Modified material according to claim 1 of type sodium thiophosphate, having formula (x),
(Na₂S)ₓ(P₂S₅)₁₋ₓ, (x)
wherein 1 > x > 0;
or a material of formula (xi),
Na₄₋ₓM₁₋ₓPₓS₄, (xi)
wherein 1 ≥ x > 0 and M being independently
selected from the list comprising Cd, Ni, Fe, Mg, Zn, Al, Si, Ge, Sn;
or a material of formula (xii),
Na₇₋ₓ(PS₄)(S₂₋ₓXₓ), (xii)
wherein 2 ≥ x > 0 and X being independently selected
from the list comprising F, Cl, Br, I;
or a material of formula (xiii),
Na₆₊ₓMₓP₁₋ₓS₅X, (xiii)
with 1 > x ≥ 0 and X being independently selected from the list comprising F, Cl, Br, I
and M being independently selected from the list comprising Cd, Ni, Fe, Mg, Zn, Al, Si, Ge, Sn;
or a material of formula (xiv),
Na_{10+*x*}M_{1-*x*}P_{2+*x\*}S₁₂, (xiv)
with 1 ≥ x ≥ 0 and M being independently selected from the list comprising Cd, Ni, Fe, Mg, Zn, Al, Si, Ge, Sn;
or a material of formula (xv)
Na_{2*x*}M_{1-*x*}PS₃, (xv)
with 1 ≥ x > 0 and M being independently selected from the list comprising Cd, Ni, Fe, Mg, Zn, Al, Si, Ge, Sn;
or a material of formula (xvi)
Na_{1,2x}M₁₋ₓPS₄, (xvi)
with 1 ≥ x ≥ 0 and M being independently selected from the list comprising Cd, Ni, Fe, Mg, Zn, Al, Si, Ge, Sn,
or a material of formula (xvii)
Na_{9.54}M_{1.74}(P₁₋ₓM'ₓ)_{1.44}S_{11.7}Cl_{0.3}, (xvii)
with 1 > x ≥ 0 and M being independently selected
from the list comprising Cd, Ni, Fe, Mg, Zn, Al, Si, Ge, Sn, and M' being independently selected from the list comprising P, As, Sb;
**characterized in that** the modified material exerts
- at least one signal of the IR-spectrum of the at least one additive being part of the surface of the modified material,
the at least one additive being a Lewis base and/or
- an increase of the electrochemical stability towards pristine (unmodified) material of at least 120% and/or
- a decrease of the ionic conductivity not more than 50% of the ionic conductivity of pristine (unmodified) material and/or
- an increase of the rate capability, defined in such a way that the capacity at 0.5C is at least 5 mAh/g higher than that of pristine material and/or
- an increase of the cycling stability in such a way that the capacity retention after 100 cycles is 10% higher than the capacity retention of pristine material after 100 cycles and/or
- an increase of the electrochemical performance of the modified material in such a way that a battery cell of standard manufacturing type, having lithium as an anode, shows no short circuit until at least 100 cycles.

10. Modified material according to claim 1 of type sodium sulfide, having formula (xviii),
Na₆₊ₓMₓM'₁₋ₓS₅X, (xviii)
with 1 > x ≥ 0 and X being independently selected from the list comprising F, Cl, Br, I and M being independently selected from the list comprising Cd, Ni, Fe, Mg, Zn, Al, Si, Ge, Sn and M' being independently selected from the list comprising P, As, Sb,
**characterized in that** the modified material exerts
- at least one signal of the IR-spectrum of the at least one additive being part of the surface of the modified material,
the at least one additive being a Lewis base and/or
- an increase of the electrochemical stability towards pristine (unmodified) material of at least 120% and/or
- a decrease of the ionic conductivity not more than 50% of the ionic conductivity of pristine (unmodified) material and/or
- an increase of the rate capability, defined in such a way that the capacity at 0.5C is at least 5 mAh/g higher than that of pristine material and/or
- an increase of the cycling stability in such a way that the capacity retention after 100 cycles is 10% higher than the capacity retention of pristine material after 100 cycles and/or
- an increase of the electrochemical performance of the modified material in such a way that a battery cell of standard manufacturing type, having lithium as an anode, shows no short circuit until at least 100 cycles.

11. Modified material according to any one of claims 7 through 10, **characterized in that** the at least one additive being a Lewis base is a member of the list of additives comprising
N-methyl-2-pyrrolidone, dimethylformamide, N,N-dimethylacetamide, tetrahydrofuran, dioxane.

12. Modified material according to any one of claims 7 through 10, **characterized in that** the at least one additive being a Lewis base has at least one substituent, independently chosen from the list of substituents comprising -OH, -F, -Cl, -Br, -I, aldehyde, amino (primary, secondary, tertiary), anhydride, amide group, carbonyl, carboxyl, carbonate, ether, phosphate, sulfate, lactone, ketone, quinone, phenol, nitrile, nitro.

13. Electrolyte comprising the modified material according to any one of claims 7 through 12.

14. Catholyte comprising the modified material according to any one of claims 7 through 12.

15. An alkali metal-ion battery comprising the electrolyte according to claim 13 and/or the catholyte according to claim 14.
